# EUROPEAN PATENT SPECIFICATION

(11) **EP 4 644 717 B1**
(45) Date of publication and mention of the grant of the patent: **30.09.2026**
(21) Application number: 24173127.2
(22) Date of filing: 29.04.2024
(51) Int. Cl.: F16C 11/12

(54) **A JOINT ASSEMBLY FOR A BALL JOINT OF A V-STAY AND A METHOD OF RELEASING A JOINT ASSEMBLY**
GELENKANORDNUNG FÜR EIN KUGELGELENK EINER V-STREBE UND VERFAHREN ZUM LÖSEN EINER GELENKANORDNUNG
ENSEMBLE JOINT POUR JOINT À ROTULE D'UN SUPPORT EN V ET PROCÉDÉ DE LIBÉRATION D'UN ENSEMBLE JOINT

(43) Date of publication of application: 05.11.2025
(73) Proprietor: VOLVO TRUCK CORPORATION, 405 08 Göteborg (SE)
(72) Inventor: ÖSTMAN, Bill, 436 57 HOVÅS (SE); BERGQVIST, Sven, 411 39 GÖTEBORG (SE)
(74) Representative: Ström & Gulliksson AB

(56) References cited:
- EP-A1- 2 199 119
- DE-U1- 9 307 482

## Description

### TECHNICAL FIELD

The disclosure relates generally to joint assemblies. In particular aspects, the disclosure relates to a joint assembly for a ball joint of a vehicle and to a method of releasing a joint assembly of a ball joint. The disclosure can be applied to heavy-duty vehicles, such as trucks, trailers, buses, and construction equipment, among other vehicle types. Although the disclosure may be described with respect to a particular vehicle, the disclosure is not restricted to any particular vehicle.

### BACKGROUND

Joint assemblies e.g. for ball joints of heavy-duty vehicles are typically released by a receiving part being disassembled. The disassembly may involve removing fixing elements such as screws and, correspondingly, assembly may involve attaching fixing elements.

One joint assembly that may require disassembly for releasing the assembly is found in a so called V-stay. US5183283A discloses an apparatus for limiting lateral movement in trailers. The apparatus discloses a pivotal joint, which may be a ball joint, and the apparatus forms an example of a V-stay. DE 93 07 482 U1 discloses a joint assembly according to the preamble of claim 1.

### SUMMARY

According to a first aspect of the disclosure, there is provided a joint assembly for a ball joint of a vehicle, the joint assembly comprising a housing, a joint member that may be at least partly inserted into the housing, and a locking member. The latter is movable between a locked position, in which the joint member is locked to the housing, and an unlocked position. The joint assembly further comprises a resilient member that is arranged to bias the locking member towards the locked position, and a fluid inlet. The joint assembly is configured such that a pressurized fluid may be supplied via the fluid inlet to move the locking member from the locked position to the unlocked position.

The first aspect of the disclosure may seek to solve the problem of releasing ball joints. Technical benefits may include that the ball joints may be released in a safe and simple manner, requiring no or little manual work such as removing fixing elements. Furthermore, the ball joints may be released, or engaged, remotely without technicians, such as workshop personnel, being required to work in the vicinity of the ball joint. In some applications, there may be little space available for accessing the ball joints. Thus, the present disclosure brings advantages from a work environments and safety perspective, especially since a ball joint may carry a substantial weight. As compared to prior art solutions, the present disclosure may allow release of ball joints also after a long time of use, with no issues with such as stuck and/or corroded components, e.g. corroded fixing elements.

The pressurized fluid may be pressurized air, which is generally available in workshops. The pressure required for moving the locking member to the unlocked position may be tailored by the design of the joint assembly. For example, the pressure required may be at least 5 bar or at least 10 bar. In other words, the present disclosure allows for pneumatic assisted coupling and decoupling of ball joints, such as a ball joint for a V-stay.

According to the invention, the locking member comprises a first surface and the joint assembly is configured such that the pressurized fluid may act on the first surface to move the locking member from the locked position to the unlocked position. A technical benefit may include a relatively simple and reliable design. Further, the size of the first surface may be tailored such that the required pressure of the pressurized fluid can be set to a desired level. The first surface may be one delimiting surface or wall of a pressure chamber. The locking member may be referred to as a piston member, or may comprise a piston portion, that is movable in a cylinder housing portion provided by the joint assembly housing. In a relatively simple realization, the first surface may be annular. The annular first surface may encircle the joint member, which may be beneficial from a force distribution perspective.

Optionally in some examples, including in at least one preferred example, the locking member comprises a second surface and the joint assembly is configured such that the resilient member may act on the second surface to move the locking member from the unlocked position to the locked position. Thus, the pressurized fluid may counteract the resilient member.

Optionally in some examples, including in at least one preferred example, the joint assembly is configured such that the locking member is movable along a straight linear path between the locked position and the unlocked position. Such a solution may entail that there is no or only little friction between the locking member and the housing.

Optionally in some examples, including in at least one preferred example, the first surface is arranged on a first side of the locking member and the second surface is arranged on a second side of the locking member, wherein the first side is opposite to the second side. A technical benefit may include that forces acting on the first and second side, respectively, may be directed along the same axis and may counteract each other along that axis. Such a solution is reliable and requires few moving parts, while counteracting forces may affect the locking member with no or only little friction loss.

Optionally in some examples, including in at least one preferred example, the first surface of the locking member is annular. An annular first surface, on which the pressurized fluid acts, may be beneficial from a force distribution perspective. Especially if the annular first surface encircles the joint member. The fluid force acting on the first annular surface may be translated to a force directed towards the joint member, and said force may securely clamp the joint member in the housing.

Optionally in some examples, including in at least one preferred example, the locking member comprises a bearing surface that is inclined with respect to the straight linear path along with the locking member is movable, such that when the locking member moves from the unlocked position to the locked position the bearing surface may exert a clamping force that clamps the joint member. A technical benefit may include a sturdy and reliable solution. The inclination of the bearing surface may be tailored such that a desired movement of the locking member is translated to a desired clamping movement, which results in the clamping force. Typically, the inclination or angle of the bearing surface may be selected such that the force from the resilient member results in a substantially larger clamping force. For example, the angle may be from 10 degrees to 30 degrees. The clamping force may be a radial clamping force. The joint assembly may be configured such that locking member may move axially from the unlocked position to the locked position and the bearing surface may exert a radial clamping force that clamps the joint member.

Optionally in some examples, including in at least one preferred example, the joint assembly comprises a first bearing unit arranged between the bearing surface and the joint member when the latter is in position in the housing. A technical benefit of the first bearing unit may include that the joint member may be rotationally and pivotally journalled in the housing. Further, the bearing unit may result in a uniform force distribution around the joint member. The joint assembly may be configured such that when the locking member moves from the unlocked position to the locked position, the bearing surface presses the first bearing unit towards the joint member and exerts the clamping force onto the joint member. In other words, the clamping force may be exerted by the bearing surface via the bearing unit. The clamping force may be exerted by the bearing surface via the bearing unit may be substantially.

Optionally in some examples, including in at least one preferred example, the resilient member is a helical compression spring that encircles the joint member as seen along the longitudinal axis of the helical resilient member. A technical benefit may include a compact and reliable solution. The helical compression spring may act on the optionally annular first surface of the locking member.

According to a second aspect of the disclosure, there is provided a ball joint for a vehicle, the ball joint comprising the joint assembly of any preceding claim. In one aspect, the joint assembly may be referred to as a ball joint. Thus, in one aspect there is provided a ball joint comprising a housing; a joint member that may be at least partly inserted into the housing; a locking member that is movable between a locked position, in which the joint member is locked to the housing, and an unlocked position; the ball joint further comprising a resilient member that is arranged to bias the locking member towards the locked position; wherein the joint assembly comprises a fluid inlet and is configured such that a pressurized fluid may be supplied via the fluid inlet to move the locking member from the locked position to the unlocked position.

According to a third aspect of the disclosure, there is provided a V-stay for a vehicle, the V-stay comprising the joint assembly.

According to a fourth aspect of the disclosure, there is provided a vehicle comprising the joint assembly, the ball joint or the V-stay. The vehicle may by a heavy-duty vehicle. The heavy-duty vehicle may be a trailer that comprises at least one driving wheel axle, or may be a truck to which the trailer may be connected. The trailer may comprise an electric motor driving at least one wheel axle of the trailer, which may mean that there is only a restricted space available for accessing the joint assembly.

According to a fifth aspect of the disclosure, there is provided a method of releasing a joint assembly of a ball joint, the joint assembly comprising a joint member and a locking member that is movable between a locked position in which the joint member is locked and an unlocked position, the joint assembly further comprising a resilient member that is arranged to bias the locking member towards the locked position, the method comprising supplying a fluid to the joint assembly to move the locking member from the locked position to the unlocked position. The method may be referred to as a method of remotely releasing a joint assembly of a ball.

Optionally in some examples, including in at least one preferred example, the method comprises connecting a pressurized fluid source to the joint assembly before supplying the fluid. In other words, the fluid source may be disconnected from the joint assembly during normal operation of the vehicle. A technical benefit may involve ensured safety, as a disconnected fluid source cannot inadvertently release the joint assembly.

Optionally in some examples, including in at least one preferred example, the joint assembly comprises a housing to which the joint member is locked when the locking member is in the locked position, the method comprising detaching the joint member from the housing after supplying the fluid to the joint assembly to move the locking member from the locked position to the unlocked position.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein. As regards possible features, and associated advantages, of the second to fifth aspects, reference is made to the herein provided description of the first aspect.

### BRIEF DESCRIPTION OF THE DRAWINGS

Examples are described in more detail below with reference to the appended drawings.
**FIG. 1** to **FIG. 4** are exemplary schematic side views of a joint assembly and illustrate its operation.
**FIG. 5** is an exemplary view of an alternative joint assembly.
**FIG. 6** illustrates a method of releasing a joint assembly.
**FIG. 7** shows a V-stay that comprises the joint assembly of **FIG. 1** or **FIG. 5****.**
**FIG. 8** shows an exemplary vehicle that comprises the V-stay of **FIG. 7****.**

### DETAILED DESCRIPTION

The detailed description set forth below provides information and examples of the disclosed technology with sufficient detail to enable those skilled in the art to practice the disclosure.

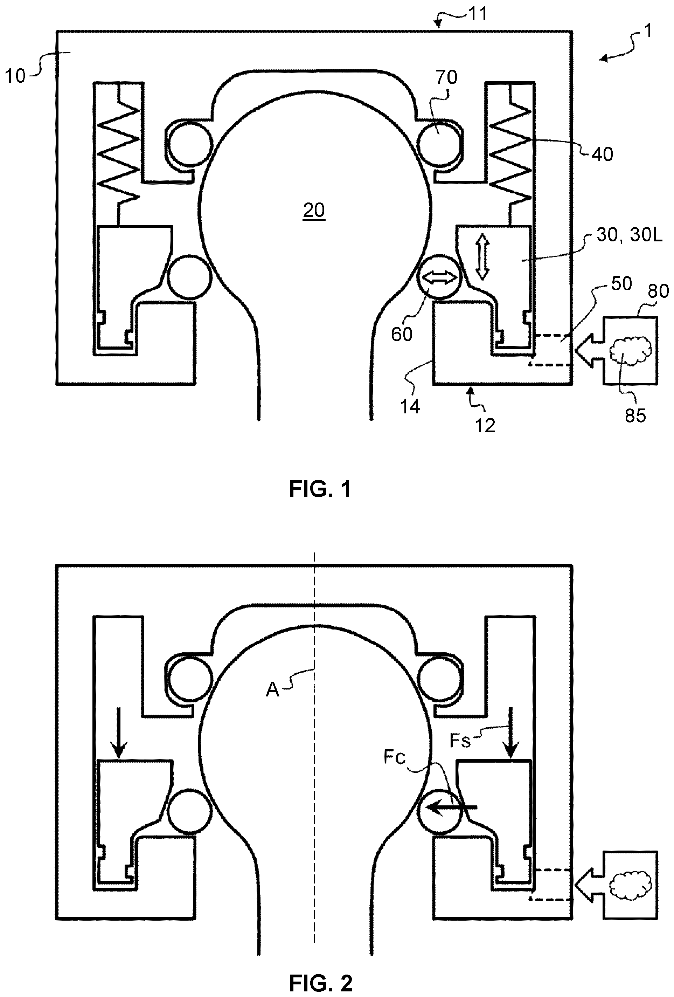

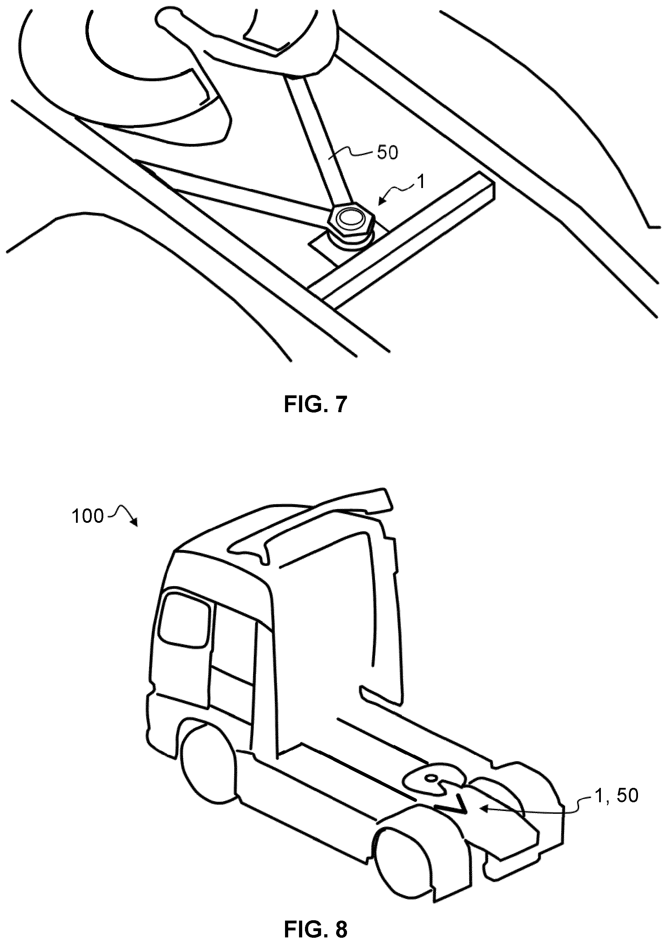

**FIG. 1 to FIG. 4** disclose a joint assembly 1 for ball joint of a vehicle 100. A vehicle 100, in the present example a heavy-duty vehicle in the form of a truck, is shown in **FIG. 8****.** The vehicle 100 comprises a V-stay 50, which is better illustrated in **FIG. 7****.**

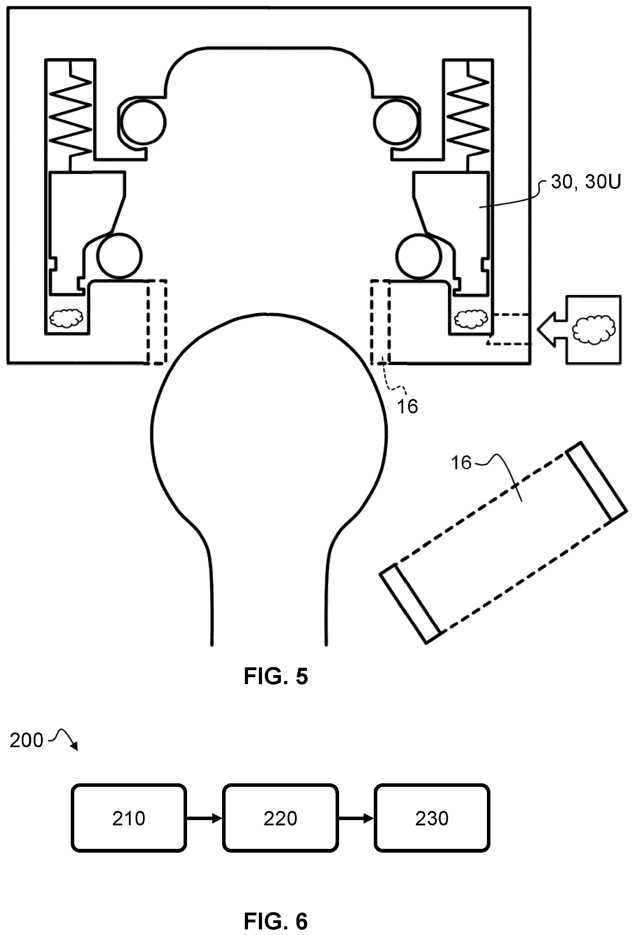

The joint assembly 1 comprises a housing 10 and a joint member 20, in the present example a ball of a ball joint, which may be at least partly inserted into the housing 10. **FIG. 1** to **FIG. 4** show the joint member 20 when received in the housing 10 whereas **FIG. 5** shows the joint member 20 when released and located outside the housing 10.

The joint assembly 1 comprises a locking member 30 that is movable between a locked position 30L **(****FIG. 1****),** in which the joint member 20 is locked to the housing 10, and an unlocked position 30U **(****FIG. 5****).** When the locking member 30 is in the unlocked position 30U the joint member 20 may be unlocked from the housing 10.

In the present examples, when the locking member 30 is in the locked position 30L the joint member 20 is locked by the locking member 30. Correspondingly, when the locking member 30 is in the unlocked position 30U the joint member 20 is not locked by the locking member 30.

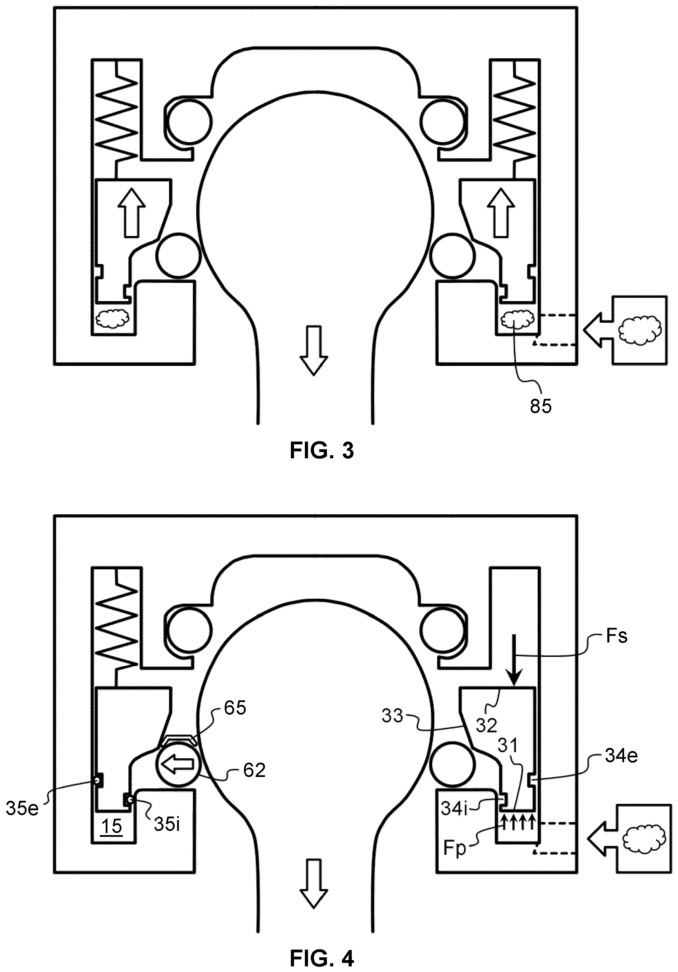

The joint assembly 1 comprises a resilient member 40 that is arranged to bias the locking member 30 towards the locked position 30L, as is best illustrated in **FIG. 2****.** In other words, the resilient member 40 exerts a resilient force, or spring force, Fs on the locking member 30 such that the latter is pushed to the locked position 30L. The joint assembly 1 further comprises a fluid inlet 50, as is illustrated. The joint assembly 1 is configured such that a pressurized fluid 85, schematically shown in **FIG. 1** to **FIG. 5** and denoted in **FIG. 1** and **FIG. 3****,** may be supplied via the fluid inlet 50 to move the locking member 30 from the locked position 30L to the unlocked position 30U.

The present locking member 30 comprises a first surface 31, a second surface 32 and a third surface in the form of a bearing surface 33, denoted in **FIG. 4****.** The present joint assembly 1 is configured such that the pressurized fluid 85 may act on the first surface 31, see in particular **FIG. 4** that illustrates a force Fp generated by the pressurized fluid 85 affecting the first surface 31. As a result of the pressure force Fp, the locking member 30 may move from the locked position 30L to the unlocked position 30U, see in particular **FIG. 3** in with a hollow arrow indicates a movement of the locking member 30.

The present joint assembly 1 is configured such that the resilient member 40 may act on the second surface 32, see in particular **FIG. 2** and **FIG. 4** that illustrate a force Fs of the resilient member 40. The spring force Fs may move the locking member 30 from the unlocked position 30U to the locked position 30L. In more detail, provided that there is no or not a sufficient pressure force Fp acting on the first surface 31 of the locking member 30, the spring force Fs will move the locking member 30 from the unlocked position 30U to the locked position 30L.

As is illustrated, the joint assembly 1 may be configured such that the locking member 30 is movable along a straight linear path between the locked position 30L and the unlocked position 30U. Further, in the present examples the first surface 31 is arranged on a first side of the locking member 30 and the second surface 32 is arranged on a second, opposite, side of the locking member 30.

As is apprehended from the schematic, cross-sectional side views of **FIG. 1** to **FIG. 5****,** especially in conjunction with **FIG. 7** that shows the essentially cylindrical joint assembly 1 in isometric view, the present first surface 31 is annular. In more detail, the housing 10 is essentially cylindrical and the locking member 30 is annular. The locking member 30 may be referred to as a sleeve shaped locking member 30.

The bearing surface 33 of the locking member 30 is inclined with respect to the straight linear path along with the locking member 30 is movable, see **FIG. 1** to **FIG. 5****.** Thus, when the locking member 30 moves from the unlocked position 30U to the locked position 30L the bearing surface 33 may exert a clamping force Fc that clamps the joint member 20, see in particular **FIG. 2** that illustrates the clamping force Fc.

In the present examples, as illustrated, the joint assembly 1 comprises a first bearing unit 60 arranged between the bearing surface 33 and the joint member 20 when the latter is in position in the housing 20. As is also shown, the joint assembly 1 comprises a second bearing unit 70 arranged at an opposite end of the joint member 20. The second bearing unit 70 may be held in a bearing race of the housing 10. Thus, as is apprehended from **FIG. 1****,** the bearing units 60, 70 may provide low-friction journaling of the joint member 20 inside the housing 10. The joint member 20 may thus be rotationally (around its longitudinal axis A) and pivotally (around its center point) journalled in the housing 10.

As in indicated in **FIG. 2****,** when the locking member 30 moves from the unlocked position 30U to the locked position 30L, the bearing surface 33 presses the first bearing unit 60 towards the joint member 20 and exerts the clamping force Fc onto the joint member 20. Referring still e.g. to **FIG. 2****,** the joint member 20 may be drawn into the housing 10 by means of the clamping force Fc. In some detail, the present joint member 20 comprises a substantially spherical portion and when the joint member 20 is inserted into the housing 10 the first bearing unit 60 exerts the clamping force Fc onto an inclined face of the substantially spherical portion.

Typically, the first bearing unit 60 comprises a plurality of bearing balls 62 (only two illustrated herein) distributed around the periphery of the joint member 20. The first bearing unit 60 may resemble a ball bearing. In one plausible realization, the first bearing unit 60 comprises a plurality of bearing balls 62 that are loosely attached inside the housing 10 by grease. Since the bearing surface 33 is adapted to move and press the first bearing unit 60 towards the joint member 20, the bearing unit 60 is preferably adapted to be able to radially expand and contract. There may be provided a cage 65, illustrated in **FIG. 4****,** which holds the bearing balls 62. The optional cage 65 may be flexible or otherwise adapted to radially expand and contract.

As is schematically illustrated in **FIG. 1****,** the resilient member 40 may be a spring, in the present examples a compression spring. The present compression spring is helical and encircles the joint member 20 as seen along the longitudinal axis of the helical compression spring.

The housing 10 may comprise a first end 11 and a second end 12. The second housing end 12 may comprising an opening 14, denoted in **FIG. 1****,** for insertion of the joint member 20. As is illustrated, the first housing end 11 may be closed. As is also illustrated, the first housing end 11 may be upper end and the second housing end 12 may be a lower end. Thereby, the closed upper end 11 may hinder the ingress of water and particles from entering the housing 10. The fluid inlet 50 may be is positioned closer to the second housing end 12 than to the first housing end 11, which may be beneficial as the second housing end 12 may be more readily accessible to workshop personnel.

The alternative joint assembly 1 of **FIG. 5****,** differs from the one of the earlier figures in that it comprises a constriction member 16 that is releasably attached to the opening 14. The joint member 20 is not withdrawable through the opening 14 when the constriction member 16 is attached to the opening 14. The joint member 20 is withdrawable through the opening 14 when the constriction member 16 is not attached to the opening 14. In other words, the alternative joint assembly 1 of **FIG. 5** referred to as a form-locking joint assembly 1. In the example of **FIG. 1** to **FIG. 4****,** the joint member 20 may in theory be withdrawn from the housing 10 through the opening 14 provided that a withdrawing force is large enough to move the locking member 30 to its unlocking position 30U against the spring force Fs. In other words, the joint assembly 1 of **FIG. 1** to **FIG. 4****,** may be referred to as a force-locking joint assembly 1. However, the angle of the inclined bearing surface, and/or the stiffness of the spring 40, may be selected such that a theoretically sufficient withdrawing force is extremely large, such that the force-locking joint assembly 1 would not disengage even under extreme conditions. It is believed that the joint assembly 1 may be designed such that the theoretically sufficient withdrawing force is larger than a maximum force that the joint assembly 1 withstands, such that the joint assembly 1 would fail before the joint member 20 would be withdrawn from the housing 10.

The present joint assemblies 1 may comprise a longitudinal axis A shown in **FIG. 2****.** As is illustrated, said axis A is parallel to or coincides with the longitudinal axis of the helical resilient member 40. Further, the longitudinal axis A may be a center axis of the joint member 20. The present joint member 20 is rotationally symmetric around the longitudinal axis A. The spring force Fs and the pressure force Fp may be substantially parallel to, or as herein parallel to, the longitudinal axis A. The spring force Fs and the pressure force Fp may be referred to as axial forces. The clamping force Fc may be a substantially orthogonal to the longitudinal axis A. The clamping force Fc may be referred to as a radial force.

The joint assembly 1 may comprise a sealing arrangement comprising a sealing holder 34i, 34e and a gasket 35i, 35e, see in particular **FIG. 4****.** The sealing arrangement may to seal a pressure chamber 15 formed in part by the locking member 30. Referring still to **FIG. 4****,** the first surface 31 of the locking member 30 may form a delimiting wall of the pressure chamber 15. In the present examples, there is an inner sealing holder 34i and an outer or external sealing holder 34e. The present sealing holders 34i, 34e are grooves provided radially internally and externally on the locking member 30. In the present examples, there are inner and outer (or external) gaskets 35i, 35e in the form of O-rings. Referring still to **FIG. 4****,** one end (the lower end in **FIG. 4****)** of the locking member 30 may be referred to as a piston portion or an annular pistol portion. The piston portion of the locking member is movable, along the longitudinal axis A, in a cylinder housing portion provided in the housing 10. The present cylinder housing portion is annular.

Especially in heavy-duty vehicles, a rear axle may be connected to the vehicle chassis with a V-rod structure often referred to as a V-stay. The present joint assemblies 1 may for example be used in a V-stay 50, shown in **FIG. 7** and **FIG. 8****.** A V-stay 50 may connect a chassis to a differential and suspension system in heavy-duty vehicles, for ensuring high stability, safety and comfort. AV-stay 50 may be a device for connecting a wheel axle of e.g. a towed vehicle, such as a trailer, to a truck to compensate for inertial forces while turning.

**FIG. 6** illustrated a method 200 of releasing a joint assembly 1, such as the ones described herein. The joint assembly 1 may be for or may be a ball joint. The joint assembly 1 comprises a joint member 20 and a locking member 30 that is movable between a locked position 30L in which the joint member 20 is locked and an unlocked position 30U. The joint assembly 1 further comprises a resilient member 40 that is arranged to bias the locking member 30 towards the locked position 30L.

The method 200 comprises supplying 220 a fluid to the joint assembly 1 to move the locking member 30 from the locked position 30L to the unlocked position 30U. The method 200 may further comprising connecting 210 a pressurized fluid source 80 to the joint assembly 1 before supplying 220 the fluid. The joint assembly 1 may comprise a housing 10 to which the joint member 20 is locked when the locking member 30 is in the locked position 30L, and the method 200 may comprise detaching 230 the joint member 20 from the housing 10 after supplying 220 the fluid to the joint assembly 1 to move the locking member 30 from the locked position 30L to the unlocked position 30U.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. A joint assembly (1) for a ball joint of a vehicle (100), the joint assembly (1) comprising
- a housing (10),
- a joint member (20) that may be at least partly inserted into the housing (10),
- a locking member (30) that is movable between a locked position (30L), in which the joint member (20) is locked to the housing (10), and an unlocked position (30U), the joint assembly (1) further comprising
- a resilient member (40) that is arranged to bias the locking member (30) towards the locked position (30L),
wherein the joint assembly (1) comprises a fluid inlet (50) and is configured such that a pressurized fluid (85) may be supplied via the fluid inlet (50) to move the locking member (30) from the locked position (30L) to the unlocked position (30U),
chracterized in that
the locking member (30) comprises a first surface (31) and the joint assembly (1) is configured such that the pressurized fluid (85) may act on the first surface (31) to move the locking member (30) from the locked position (30L) to the unlocked position (30U).

2. The joint assembly (1) of claim 1, wherein the locking member (30) comprises a second surface (32) and the joint assembly (1) is configured such that the resilient member (40) may act on the second surface (32) to move the locking member (30) from the unlocked position (30U) to the locked position (30L).

3. The joint assembly (1) of claim 2, wherein the joint assembly (1) is configured such that the locking member (30) is movable along a straight linear path between the locked position (30L) and the unlocked position (30U).

4. The joint assembly (1) of claim 3, wherein the first surface (31) is arranged on a first side of the locking member (30) and the second surface (32) is arranged on a second side of the locking member (30), wherein the first side is opposite to the second side.

5. The joint assembly (1) of claim 3 or 4, wherein the first surface (31) is annular.

6. The joint assembly (1) of claim 4 or 5, wherein the locking member (30) comprises a bearing surface (33) that is inclined with respect to the straight linear path along with the locking member (30) is movable, such that when the locking member (30) moves from the unlocked position (30U) to the locked position (30L) the bearing surface (33) may exert a clamping force (Fc) that clamps the joint member (20).

7. The joint assembly (1) of claim 6, comprising a first bearing unit (60) arranged between the bearing surface (33) and the joint member (20) when the latter is in position in the housing (20), wherein the joint assembly (1) is configured such that when the locking member (30) moves from the unlocked position (30U) to the locked position (30L) the bearing surface (33) presses the first bearing unit (60) towards the joint member (20) and exerts the clamping force (Fc) onto the joint member (20).

8. The joint assembly (1) of any preceding claim, wherein the resilient member (40) is a helical compression spring that encircles the joint member (20) as seen along the longitudinal axis (A) of the helical resilient member (40).

9. A ball joint for a vehicle (100), the ball joint comprising the joint assembly (1) of any preceding claim.

10. A V-stay (50) for a vehicle (100), the V-stay (50) comprising the joint assembly (1) according to any of claims 1 to 8.

11. A vehicle (100) comprising the joint assembly (1) according to any of claims 1 to 8, the ball joint of claim 9 or the V-stay (50) of claim 10.

12. A method (200) of releasing a joint assembly (1) of any of claims 1-8 for a ball joint, the joint assembly (1) comprising a joint member (20) and a locking member (30) that is movable between a locked position (30L) in which the joint member (20) is locked and an unlocked position (30U), the joint assembly (1) further comprising a resilient member (40) that is arranged to bias the locking member (30) towards the locked position (30L), the method (200) comprising
- supplying (220) a fluid to the joint assembly (1) to move the locking member (30) from the locked position (30L) to the unlocked position (30U).

13. The method (200) of claim 12, comprising
- connecting (210) a pressurized fluid source (80) to the joint assembly (1) before supplying (220) the fluid.

14. The method (200) of claim 12 or 13, wherein the joint assembly (1) comprises a housing (10) to which the joint member (20) is locked when the locking member (30) is in the locked position (30L), the method (200) comprising
- detaching (230) the joint member (20) from the housing (10) after supplying (220) the fluid to the joint assembly (1) to move the locking member (30) from the locked position (30L) to the unlocked position (30U).

## Patentansprüche

1. Eine Gelenkanordnung (1) für ein Kugelgelenk eines Fahrzeugs (100), wobei die Gelenkanordnung (1) Folgendes umfasst:
- ein Gehäuse (10),
- ein Gelenkelement (20), das zumindest teilweise in das Gehäuse (10) eingesetzt werden kann,
- ein Verriegelungselement (30), das zwischen einer verriegelten Position (30L), in der das Gelenkelement (20) mit dem Gehäuse (10) arretiert ist, und einer entriegelten Position (30U) beweglich ist, wobei die Gelenkanordnung (1) ferner Folgendes umfasst:
- ein elastisches Element (40), das so angeordnet ist, dass es das Verriegelungselement (30) in Richtung der verriegelten Position (30L) vorspannt,
wobei die Gelenkanordnung (1) eine Fluideinlassöffnung (50) umfasst und so konfiguriert ist, dass ein unter Druck stehendes Fluid (85) über die Fluideinlassöffnung (50) zugeführt werden kann, um das Verriegelungselement (30) von der verriegelten Position (30L) in die entriegelte Position (30U) zu bewegen,
**dadurch gekennzeichnet, dass**
das Verriegelungselement (30) eine erste Oberfläche (31) umfasst und die Gelenkanordnung (1)
so konfiguriert ist, dass das unter Druck stehende Fluid (85) auf die erste Oberfläche (31) wirken kann, sodass das Verriegelungselement (30) von der verriegelten Position (30L) in die entriegelte Position (30U) bewegt werden kann.

2. Die Gelenkanordnung (1) gemäß Anspruch 1, wobei das Verriegelungselement (30) eine zweite Oberfläche (32) umfasst und die Gelenkanordnung (1) so konfiguriert ist, dass das elastische Element (40) auf die zweite Oberfläche (32) wirken kann, um das Verriegelungselement (30) von der entriegelten Position (30U) in die verriegelte Position (30L) zu bewegen.

3. Die Gelenkanordnung (1) gemäß Anspruch 2, wobei die Gelenkanordnung (1) so konfiguriert ist, dass das Verriegelungselement (30) entlang eines geraden, linearen Pfades beweglich ist, zwischen der verriegelten Position (30L) und der entriegelten Position (30U).

4. Die Gelenkanordnung (1) gemäß Anspruch 3, wobei die erste Oberfläche (31) auf einer ersten Seite des Verriegelungselements (30) angeordnet ist und die zweite Oberfläche (32) auf einer zweiten Seite des Verriegelungselements (30) angeordnet ist, wobei die erste Seite der zweiten Seite gegenüberliegt.

5. Die Gelenkanordnung (1) gemäß Anspruch 3 oder 4, wobei die erste Oberfläche (31) ringförmig ist.

6. Die Gelenkanordnung (1) gemäß Anspruch 4 oder 5, wobei das Verriegelungselement (30) eine Kontaktfläche (33) umfasst, die in Bezug auf den geraden, linearen Pfad geneigt ist, entlang dem das Verriegelungselement (30) beweglich ist, so dass, wenn das Verriegelungselement (30) sich von der entriegelten Position (30U) in die verriegelte Position (30L) bewegt, die Lagerfläche (33) eine Klemmkraft (Fc) ausüben kann, die das Verbindungselement (20) einklemmt.

7. Die Verbindungseinheit (1) gemäß Anspruch 6, umfassend eine erste Lagereinheit (60), die zwischen der Lagerfläche (33) und dem Verbindungselement (20) angeordnet ist, wenn letzteres in der Position im Gehäuse (20) angeordnet ist, wobei die Verbindungseinheit (1) so konfiguriert ist, dass, wenn sich das Verriegelungselement (30) von der entriegelten Position (30U) in die verriegelte Position (30L) bewegt, die Lagerfläche (33) die erste Lagereinheit (60) in Richtung des Verbindungselements (20) drückt und die Klemmkraft (Fc) auf das Verbindungselement (20) ausübt.

8. Die Verbindungseinheit (1) gemäß einem der vorhergehenden Ansprüche, wobei das elastische Element (40) eine helikale Druckfeder ist, die das Verbindungselement (20) entlang der Längsachse (A) der helikalen elastischen Feder (40) umschließt.

9. Ein Kugelgelenk für ein Fahrzeug (100), wobei das Kugelgelenk die Verbindungseinheit (1) gemäß einem der vorhergehenden Ansprüche umfasst.

10. Ein V-Streben (50) für ein Fahrzeug (100), wobei das V-Streben (50) die Verbindungseinheit (1) gemäß einem der Ansprüche 1 bis 8 umfasst.

11. Ein Fahrzeug (100) umfassend die Verbindungseinheit (1) gemäß einem der Ansprüche 1 bis 8, das Kugelgelenk gemäß Anspruch 9 oder das V-Streben (50) gemäß Anspruch 10.

12. Ein Verfahren (200) zum Lösen einer Verbindungseinheit (1) gemäß einem der Ansprüche 1-8 für ein Kugelgelenk, wobei die Verbindungseinheit (1) ein Verbindungselement (20) und ein Verriegelungselement (30) umfasst, das zwischen einer verriegelten Position (30L), in der das Verbindungselement (20) verriegelt ist, und einer entriegelten Position (30U) beweglich ist, wobei die Verbindungseinheit (1) ferner ein elastisches Element (40) umfasst, das so angeordnet ist, dass es das Verriegelungselement (30) in Richtung der verriegelten Position (30L) drückt, wobei das Verfahren (200) Folgendes umfasst:
- Zuführen (220) eines Fluids zur Verbindungseinheit (1), um das Verriegelungselement (30) von der verriegelten Position (30L) in die entriegelte Position (30U) zu bewegen.

13. Das Verfahren (200) gemäß Anspruch 12, das Folgendes umfasst:
- Verbinden (210) einer unter Druck stehenden Fluidquelle (80) mit der Verbindungseinheit (1), bevor das Fluid zugeführt wird (220).

14. Verfahren (200) nach Anspruch 12 oder 13, wobei die Gelenkbaugruppe (1) ein Gehäuse (10) umfasst, an dem das Gelenkelement (20) verriegelt ist, wenn sich das Verriegelungselement (30) in der verriegelten Position (30L) befindet, wobei das Verfahren (200) Folgendes umfasst:
- das Lösen (230) des Gelenkelements (20) vom Gehäuse (10) nach dem Zuführen (220) des Fluids zur Gelenkbaugruppe (1), um das Verriegelungselement (30) aus der verriegelten Position (30L) in die entriegelte Position (30U) zu bewegen.

## Revendications

1. Un assemblage d'articulation (1) pour une rotule d'un véhicule (100), l'assemblage d'articulation (1) comprenant
- un boîtier (10),
- un organe d'articulation (20) qui peut être au moins partiellement inséré dans le boîtier (10),
- un organe de verrouillage (30) qui est mobile entre une position verrouillée (30L), dans laquelle l'organe d'articulation (20) est verrouillé au boîtier (10), et une position déverrouillée (30U), l'assemblage d'articulation (1) comprenant en outre
- un organe élastique (40) qui est agencé pour solliciter l'organe de verrouillage (30) vers la position verrouillée (30L),
dans lequel l'assemblage d'articulation (1) comprend une entrée de fluide (50) et est configuré de sorte qu'un fluide sous pression (85) peut être fourni via l'entrée de fluide (50) pour déplacer l'organe de verrouillage (30) de la position verrouillée (30L) vers la position déverrouillée (30U),
**caractérisé en ce que**
l'organe de verrouillage (30) comprend une première surface (31) et l'assemblage d'articulation (1) est configuré de sorte que le fluide sous pression (85) puisse agir sur la première surface (31) pour déplacer l'organe de verrouillage (30) de la position verrouillée (30L) vers la position déverrouillée (30U).

2. L'assemblage d'articulation (1) selon la revendication 1, dans lequel l'organe de verrouillage (30) comprend une seconde surface (32) et l'assemblage d'articulation (1) est configuré de sorte que l'organe élastique (40) peut agir sur la seconde surface (32) pour déplacer l'organe de verrouillage (30) de la position déverrouillée (30U) vers la position verrouillée (30L).

3. L'assemblage d'articulation (1) selon la revendication 2, dans lequel l'assemblage d'articulation (1) est configuré de sorte que l'organe de verrouillage (30) est mobile le long d'un trajet linéaire droit entre la position verrouillée (30L) et la position déverrouillée (30U).

4. L'assemblage d'articulation (1) selon la revendication 3, dans lequel la première surface (31) est agencée sur un premier côté de l'organe de verrouillage (30) et la seconde surface (32) est agencée sur un second côté de l'organe de verrouillage (30), dans lequel le premier côté est opposé au second côté.

5. L'assemblage d'articulation (1) selon la revendication 3 ou 4, dans lequel la première surface (31) est annulaire.

6. L'assemblage d'articulation (1) selon la revendication 4 ou 5, dans lequel l'organe de verrouillage (30) comprend une surface d'appui (33) qui est inclinée par rapport au trajet linéaire droit le long avec lequel l'organe de verrouillage (30) est mobile, de sorte que lorsque l'organe de verrouillage (30) se déplace depuis la position déverrouillée (30U) à la position verrouillée (30L) la surface d'appui (33) peut exercer une force de serrage (Fc) qui serre l'organe d'articulation (20).

7. L'assemblage d'articulation (1) de la revendication 6, comprenant une première unité d'appui (60) agencée entre la surface d'appui (33) et l'organe d'articulation (20) lorsque ce dernier est en position dans le boîtier (20), dans lequel l'assemblage d'articulation (1) est configuré de sorte que lorsque l'organe de verrouillage (30) se déplace de la position déverrouillée (30U) à la position verrouillée (30L) la surface d'appui (33) presse la première unité d'appui (60) vers l'organe d'articulation (20) et exerce la force de serrage (Fc) sur l'organe d'articulation (20).

8. L'assemblage d'articulation (1) de l'une quelconque des revendications précédentes, dans lequel l'organe élastique (40) est un ressort de compression hélicoïdal qui entoure l'organe d'articulation (20) tel que vu le long de l'axe longitudinal (A) de l'organe élastique hélicoïdal (40).

9. Une rotule pour un véhicule (100), la rotule comprenant l'assemblage d'articulation (1) de l'une quelconque des revendications précédentes.

10. Une barre en V (50) pour un véhicule (100), la barre en V (50) comprenant l'assemblage d'articulation (1) selon l'une quelconque des revendications 1 à 8.

11. Un véhicule (100) comprenant l'assemblage d'articulation (1) selon l'une quelconque des revendications 1 à 8, la rotule de la revendication 9 ou la barre en V (50) de la revendication 10.

12. Un procédé (200) de libération d'un assemblage d'articulation (1) de l'une quelconque des revendications 1 à 8 pour une rotule, l' assemblage d'articulation (1) comprenant un organe d'articulation (20) et un organe de verrouillage (30) qui est mobile entre une position verrouillée (30L) dans laquelle l'organe d'articulation (20) est verrouillé et une position déverrouillée (30U), l'assemblage d'articulation (1) comprenant en outre un organe élastique (40) qui est agencé pour solliciter l'organe de verrouillage (30) vers la position verrouillée (30L), le procédé (200) comprenant
- la fourniture (220) d'un fluide à l'assemblage d'articulation (1) pour déplacer l'organe de verrouillage (30) de la position verrouillée (30L) à la position déverrouillée (30U).

13. Le procédé (200) de la revendication 12, comprenant
- le raccordement (210) d'une source de fluide sous pression (80) à l'assemblage d'articulation (1) avant la fourniture (220) du fluide.

14. Le procédé (200) de la revendication 12 ou 13, dans lequel l'assemblage d'articulation (1) comprend un boîtier (10) auquel l'organe d'articulation (20) est verrouillé lorsque l'organe de verrouillage (30) est dans la position verrouillée (30L), le procédé (200) comprenant
- le détachement (230) de l'organe d'articulation (20) du boîtier (10) après la fourniture (220) du fluide à l'assemblage d'articulation (1) pour déplacer l'organe de verrouillage (30) de la position verrouillée (30L) vers la position déverrouillée (30U).
